# EUROPÄISCHE PATENTSCHRIFT

(11) **EP 1 994 974 B1**
(45) Veröffentlichungstag und Bekanntmachung des Hinweises auf die Patenterteilung: **07.12.2011**
(21) Anmeldenummer: 08006366.2
(22) Anmeldetag: 31.03.2008
(51) Int. Cl.: B01D 35/027, B01D 29/52, B01D 29/54, F01M 11/03

(54) **Ölfiltervorrichtung**
Oil filter
Dispositif de filtre à huile

(30) Priorität: 22.05.2007 DE 102007023641
(43) Veröffentlichungstag der Anmeldung: 26.11.2008
(73) Patentinhaber: IBS Filtran Kunststoff-/Metallerzeugnisse GmbH, 51597 Morsbach (DE)
(72) Erfinder: Stausberg, Wolfgang, 51597 Morsbach (DE); Dedering, Michael, 51597 Morsbach-Lichtenberg (DE)
(74) Vertreter: Godemeyer, Thomas

(56) Entgegenhaltungen:
- EP-A- 1 733 775
- US-A- 4 402 827
- US-A- 5 494 575

## Beschreibung

Die Erfindung betrifft eine Ölfiltervorrichtung zur Filterung von Öl in Motoren und Getrieben und eine Ölwanne mit einer solchen Ölfiltervorrichtung.

Um Öl in Motoren und Getrieben zu filtern, kann zum Beispiel eine Saugölfiltervorrichtung oder eine Druckölfiltervorrichtung zum Einsatz kommen. Bei einer Saugölfiltervorrichtung ist eine Pumpe am Ölauslass der Vorrichtung angeordnet, wobei die Pumpe mittels Unterdruck das zu filternde Öl durch ein Filtermedium saugt. In Strömungsrichtung betrachtet ist die Pumpe der Filtervorrichtung somit nachgeschaltet. Es ist üblich, eine Saugölfiltervorrichtung direkt in einem Ölsumpf einer Ölwanne anzuordnen, wobei das gesamte zu filtrierende Öl durch diese Saugölfiltervorrichtung strömt. Eine solche Konstruktion erfordert nur geringfügig zusätzlichen Bauraum, ist somit Platz sparend und benötigt keine zusätzlichen Anschlussleitungen. Bei der Auslegung einer solchen Vorrichtung wird stets eine Abwägung zwischen einem maximal erlaubtem Differenzdruck zwischen Öleinlass und Ölauslass der Vorrichtung und einer daraus resultierenden Filtrationsleistung vorgenommen. Da auch bei hoher Viskosität des Öls beziehungsweise bei tiefer Temperatur des Öls ein Mindestölvolumenstrom durch den Saugölfilter passieren muss, um eine hinreichende Schmierung eines Motors oder eines Getriebes zu erreichen, wird nur eine relativ geringe Filtrationsleistung erreicht. Eine Saugölfiltervorrichtung kann daher vereinfacht als ein Grobfilter bewertet werden.

Bei einer Druckölfiltervorrichtung wird zu filtrierendes Öl mittels einer Pumpe in eine Filtervorrichtung hinein gedrückt. Eine solche Vorrichtung ist meist in einem Nebenstrom angeordnet und kann mittels zum Beispiel eines Ventils zugeschaltet werden. Eine Druckölfiltervorrichtung ist oft innerhalb des Getriebes oder am Getriebegehäuse angebracht, wobei Schlauchverbindungen oder Rohrverbindungen außerhalb des Getriebes erforderlich sind. Im Vergleich zu einer Saugölfiltervorrichtung erfordert eine solche Konstruktion relativ viel Platz, wobei sich durch die Anschlussleitungen das Gewicht und die Kosten eines Getriebes oder Motors signifikant erhöhen. Da nur ein Teil, meistens weniger als 50 %, des zu filtrierenden Ölvolumenstromes durch eine derartige Druckölfiitervorrichtung hindurch strömt, kann ein hoch effizientes Filtermedium, zum Beispiel in plissierter Form, eingesetzt werden. Mit der hohen Filterleistung Ist eine relativ hohe Schmutzbeaufschlagung verbunden, so dass ein Filtermedium einer Druckölfiftervorrichtung relativ häufig ausgetauscht werden muss. Bei zu hohem Öldruck kann eine Druckölfiltervorrichtung zerstört werden, so dass ein Überdruckschutz im Druckölfilterkreislauf zum Beispiel mittels eines Bypass-Ventils oder einer Blende integriert sein muss.

Um in kurzer Zeit eine möglichst hohe Ölreinheit zu erreichen, kann eine Kombination aus einer Saugölfiltervorrichtung, durch welche der gesamte Ölvolumenstrom passiert, mit einer Druckölfiltervorrichtung, durch welche nur ein Nebenstrom von zum Beispiel 20 bis 40 % des gesamten Ölvolumenstroms hindurchtritt, vorgesehen sein. Nachteilig ist dabei jedoch der konstruktive und apparative Aufwand an Peripherieteilen wie Adapter, Gehäuse, Ölführung u. ä. für die Druckölfiltervorrichtung einschließlich dem erforderlichen zusätzlichen Bauraum. Aufgrund der hohen Druckbelastung ist ferner eine sehr stabile und schwere Konstruktion der Vorrichtung erforderlich. Die Kosten für eine solche Kombination aus Saugölfiltervorrichtung und Druckölfiltervorrichtung sind somit relativ hoch.

Aus der US 4,402,827 A ist eine Ölfiltervorrichtung mit einem Öleinlass und einem Ölauslass bekannt, wobei am Ölauslass eine Saugölpumpe anschließbar ist, mit welcher sich ein Unterdruck zwischen Öleinlass und Ölauslass erzeugen lässt. Die Ölfiltervorrichtung umfasst ein Grobfiltermedium und ein Feinfiltermedium in paralleler Anordnung. Das Oberflächenverhältnis von Feinfilter zu Grobfilter ist so gewählt, dass bei Mindestbetriebstemperatur ein Mindestölfluss durch das Grobfiltermedium gewährleistet ist.

Der Erfindung liegt die Aufgabe zugrunde, bei einer Ölfiltereinrichtung der vorstehend beschriebenen Art eine Konfiguration der Filtermedien zu schaffen, mit welcher Öl unter allen Temperaturbedingungen mit hoher Effizienz gereinigt werden kann.

Die Aufgabe wird durch die Merkmale der unabhängigen Ansprüche gelöst Vorteilhafte Ausgestaltungen der Erfindung sind in den Unteransprüchen aufgeführt.

Die erfindungsgemäße Ölfiltervorrichtung weist einen Öleinlass und einen Ölauslass auf, wobei am Ölauslass eine Saugölpumpe anschließbar ist, mit welcher sich ein Unterdruck zwischen dem Öleinlass und dem Ölauslass erzeugen lässt, wobei die Ölfiltervorrichtung zusätzlich ein Grob-Fitermedium und ein Feinfiltermedium aufweist, welche zwischen dem Öleinlass und dem Ölauslass angeordnet sind- Die erfindungsgemäße Ölfiltervorrichtung ist so aufgebaut, dass sie geeignet ist, unabhängig von der Viskosität eines durch den Öleinlass eindringenden Öls einen Volumenanteil dieses Öls permanent durch das Grobfiltermedium passieren zu lassen und gleichzeitig den verbleibenden Volumenanteil des Öls durch das Feinfiltermedium passieren zu lassen.

Durch diesen Aufbau der erfindungsgemäßen Ölfiltervorrichtung als Saugölfiltervorrichtung wird ein vollständiger Durchsatz des zu filtrierenden Ölvolumenstromes erreicht. Eine hohe Filtrationsleistung kann zusätzlich erreicht werden, indem jedoch nicht der gesamte Ölvolumenstrom durch ein Grobfiltermedium gefördert wird, sondern teilweise auch durch ein Feinfiltermedium. Dies erfolgt unabhängig von der Viskosität des zu filtrierenden Öls, so dass keine Ventile, Blenden oder ähnliche Stellglieder geschaltet und gesteuert werden müssen. Der Aufwand für eine Druckölfiltervorrichtung ist nicht mehr erforderlich, so dass ein leichter und kostengünstiger Aufbau erreicht wird.

Gemäß einer Ausführungsform der erfindungsgemäßen Ölfiltervorrichtung ist das Feinfiltermedium in Strömungsrichtung vor dem Grobfiltermedium angeordnet. Hierdurch wird ein hoher Differenzdruck über den geringen Strömungswiderstand des Grobfiltermediums an das Feinfiltermedium transferiert und erhöht den durch das Feinfiltermedium passierenden Ölvolumenstrom. Ist das Feinfiltermedium mit mindestens einer permanenten Öffnung versehen, durch welche Öl ungefiltert passieren kann, lässt sich damit eine inhomogene Durchströmung des Grobfiltermediums erreichen. Bei geschickter Position und/oder geeigneter Zahl der permanenten Öffnung(en) im Feinfiltermedium kann also eine Hauptströmung erreicht werden, mit der das Grobfiltermedium nicht flächig homogen beladen wird. Bei hoher Viskosität des Öls (Kaltstart) ist somit eine ausreichend offene Filtrationsfläche verfügbar, so dass der zulässige Differenzdruck nicht überschritten wird.

Die erfindungsgemäße Ölfiltervorrichtung kann gemäß einer weiteren Ausführungsform derart dimensioniert sein, dass bei hoher Viskosität des Öls der durch die mindestens eine permanente Öffnung des Feinfiltermediums zum Grobfiltermedium passierende Volumenanteil des Öls etwa 90 bis 95 % des gesamten durch die Ölfiltervorrichtung passierenden Ölvolumenstromes beträgt. Der Vorteil einer Saugölfiltervorrichtung als Grobfilter bleibt somit erhalten. Diese Funktion bleibt ebenso erhalten, wenn das Feinfiltermedium vollständig beladen ist, ohne dass ein signifikanter Anstieg des Differenzdruckes der gesamten Saugölfiltervorrichtung generiert wird. Dies ist besonders vorteilhaft, da bei einem separaten Druckölfilter bei hoher Viskosität des Öls aufgrund des eingesetzten Feinfiltermediums ein zugehöriges Bypassventil geöffnet würde, so dass unfiltriertes Öl in den Ölkreislauf eintreten würde.

Bei der erfindungsgemäßen Ölfiltervorrichtung kann sich mit zunehmender Verringerung der Viskosität des Öls während des Betriebes eines Motors oder Getriebes der Anteil des durch das Feinfiltermedium passierenden Öls ständig erhöhen, wodurch eine zunehmende Abreinigung des Öls erreicht wird. Die Ölfiltervorrichtung kann dabei derart dimensioniert sein, dass bei niedriger Viskosität des Öls der durch das Grobfiltermedium passierende Volumenanteil des Öls maximal 50 % des gesamten durch die Ölfiltervorrichtung passierenden Ölvolumenstromes beträgt. Dies bedeutet, dass ein Anteil von mindestens 50 % des gesamten Ölvolumenstromes durch das Feinfiltermedium geleitet wird, wobei dieser anschließend noch durch das Grobfiltermedium passiert.

Um eine hohe Filtrationsleistung zu erzielen, ist das Feinfiltermedium vorzugsweise ein Glasvlies, Kunststoffvlies, Cellulosevlies oder Feindrahtgewebe. Das Grobfiltermedium ist vorzugsweise ein Metallgewebe oder ein Kunststoffgewebe.

Die erfindungsgemäße Ölfiltervorrichtung weist eine Filteroberschale und eine Filterunterschale auf, wobei die Filteroberschale mit mindestens einem Abstandshalter zum Grobfiltermedium versehen ist. Damit kann das Grobfiltermedium mit hoher Genauigkeit im Filterinnenraum positioniert werden. In gleicher Weise ist die Filterunterschale mit mindestens einem Abstandshalter versehen. Bei dem Abstandshalter kann es sich um einen Abstützdom handeln, der eine Verformung der oberen und unteren Filterschalen und somit eine Verringerung des Filterinnenraumes reduziert. Zusätzlich kann ein Abstandshalter auch als Distanzsicke ausgebildet sein, so dass ein vorbestimmter Abstand zwischen Filterunterschale und zum Feinfiltermedium erzielt wird. Damit lässt sich ein bestimmtes Unterströmen des Feinfiltermediums erreichen. Außerdem kann damit verhindert werden, dass das Feinfiltermedium an einer glatten und ebenen Oberfläche der Unterschale anhaftet und die Funktion der Ölfiltervorrichtung beeinträchtigt.

Zwischen dem Grobfiltermedium und dem Feinfiltermedium ist gemäß einer weiteren Ausführungsform mindestens ein Abstandshalter vorgesehen. Dieser Abstandshalter kann als Stützgitter ausgebildet sein, wobei dieses Stützgitter dazu beitragen kann, die durch den Saugdruck entstehenden Kräfte auf die Filterunterschale zu übertragen, um eine Verformung der Filterunterschale möglichst gering zu halten. Vorzugsweise weist ein solcher Abstandshalter glasfaserverstärkten Kunststoff, insbesondere PA66GF30-35, oder Metalldrahtgewebe oder extrudiertes Kunststoffgewebe auf.

Die erfindungsgemäße Ölfiltervorrichtung ist vorzugsweise derart ausgebildet, dass ein Verhältnis der Höhen von Filteroberschale zu einem Abstandhalter zwischen dem Grobfiltermedium und dem Feinfiltermedium zu Filterunterschale etwa gleich 42:38:20 ist. Damit kann eine hohe Filtriereffizienz bei geringer Luftansammlung erreicht werden. Ferner lässt sich ein Ansammeln von Luft in der Filtervorrichtung vermeiden, indem die Filterkontur zum Ölauslass hin angepasst wird.

Ist ein freies Ende oder sind die freien Enden eines Abstandshalters mit einem Radius versehen, so ist sichergestellt, dass die Filtermedien nicht beschädigt werden. Die Größe des Radius hängt von den sich durch den Saugdruck ausbildenden Kräften in dem Ölvolumenstrom und einer Verformung eines Filtermediums unter einer solchen Belastung ab. Die Filteroberschale und Filterunterschale sowie die Abstandshalter sind derart dimensioniert, dass eine Verformung sämtlicher Bauteile so gering gehalten wird, dass sich Ölfließräume auch unter extremen Bedingungen um weniger als 7 % verkleinern.

Bei einer weiteren Ausführungsform der Ölfiltervorrichtung weist die Filteroberschale Kunststoff und die Filterunterschale Metall auf oder umgekehrt. Dadurch ist es möglich, dass die Metall aufweisende Filterschale mit einer geringen Wandstärke ausgebildet sein kann, damit Bauraum eingespart und ein maximales Filterinnenraumvolumen erreicht wird. Eine solche Filterschale weist vorzugsweise eine einfache Filterkontur auf. Bei einer komplizierten Filterschalenkontur ist es vorteilhaft, wenn die Schale Kunststoff aufweist. Damit lassen sich zum Beispiel für eine Filteroberschale auf einfache Weise durch Urformen oder Umformen Anschlusskonturen an die Pumpe sowie eine Aufnahme eines Dichtringes und Strömungsrippen im Innenraum der Ölfiltervorrichtung schaffen. Wenn eine Kunststoff-Filteroberschale zum Einsatz kommt, kann diese vorzugsweise PA66GF30-35 aufweisen.

Bei der erfindungsgemäßen Ölfiltervorrichtung ist ein hydraulischer Querschnitt des Öleinlass mindestens um den Faktor 1,5 größer ist als ein hydraulischer Querschnitt des Ölauslass, so dass die Strömungsverluste im Filterinneren relativ niedrig gehalten werden können.

Die Aufgabe wird ferner durch eine Ölwanne mit einer wie vorstehend beschriebenen Ölfiltervorrichtung gelöst.

Nachfolgend wird die Erfindung anhand von eines in der Zeichnung dargestellten Ausführungsbeispieles weiter beschrieben. Es zeigt:

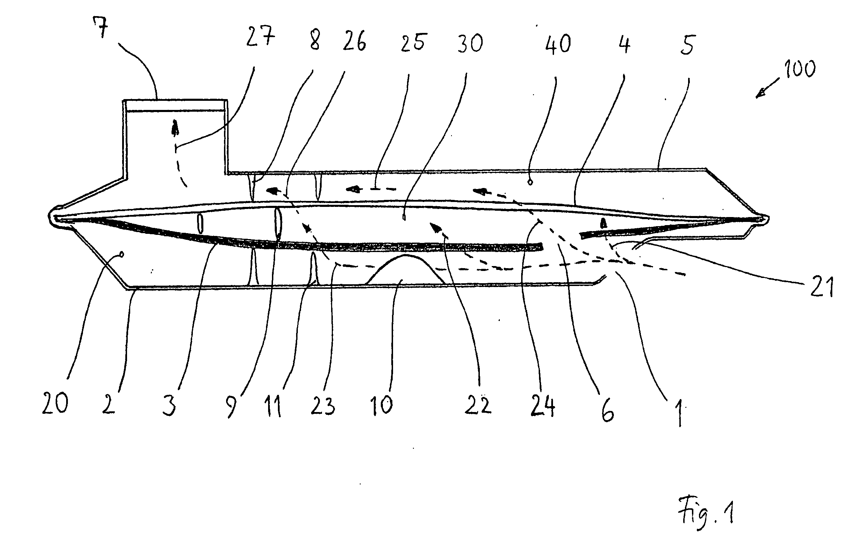

- Figur 1: eine schematische Darstellung einer Ausführungsform einer erfindungsgemäßen Ölfiltervorrichtung.

In Fig. 1 ist ein Längsquerschnitt einer Ausführungsform der erfindungsgemäßen Ölfiltervorrichtung 100 dargestellt. Die Vorrichtung weist einen Öleinlass 1 und einen Ölauslass 7 auf, wobei an letzteren eine Saugpumpe angeschlossen werden kann. Der Öleinlass 1 ist an einer Seite in einer Filterunterschale 2 vorgesehen, wobei der Ölauslass 7 auf einer gegenüberliegenden Seite in einem möglichst großen Abstand vom Öleinlass 1 in einer Filteroberschale 5 angeordnet ist. Zu filtrierendes Öl tritt aufgrund eines durch die Saugölpumpe erzeugten Unterdruckes durch den Öleinlass 1 in den Filterinnenraum 20 der Filterunterschale 2 ein. Das Öl trifft dabei auf ein Feinfiltermedium 3, siehe Pfeile 21, 22 und 23, und durchströmt dieses Feinfiltermedium 3. Dieses Filtermedium 3 weist bei der in Fig. 1 dargestellten Ausführungsform eine permanente Öffnung 6 auf, durch welche das in die Filtervorrichtung 100 eindringende Öl ohne Filtrierung durch das Feinfiltermedium 3 hindurchtreten kann, siehe Pfeil 24, und in einen Zwischenraum 30 zwischen Feinfiltermedium 3 und einem in Strömungsrichtung dahinter angeordneten Grobfiltermedium 4 gelangt. Durch den auch im Zwischenraum 30 vorhandenen Unterdruck passiert dieser Anteil des Ölvolumenstromes das Grobfiltermedium 4 und gelangt in den Filterinnenraum 40, welcher sich in Strömungsrichtung hinter dem Grobfilter 4 befindet. Von dort strömt das Öl, siehe Pfeile 25 und 27, in Richtung zum Ölauslass 7 und der Saugölpumpe (in Fig. 1 nicht dargestellt). Der Anteil des Ölvolumenstromes, welcher durch das Feinfiltermedium 3 hindurchtritt, siehe Pfeile 21, 22 und 23, passiert anschließend das Grobfiltermedium 4, siehe Pfeil 26, und erreicht ebenfalls den Ölauslass 7, siehe Pfeil 27.

Bei hoher Viskosität des Öls tritt ein großer Anteil des zu filtrierenden Öls durch die permanente Öffnung 6 des Feinfiltermediums hindurch und wird ausschließlich vom Grobfiltermedium 4 gefiltert. Das Feinfiltermedium 3 ist aufgrund des hohen Strömungswiderstandes nicht imstande, das hochviskose Öl hindurchdringen zu lassen. Mit zunehmender Temperatur und damit abnehmender Viskosität des Öls kann ein immer größerer Anteil des durch den Öleinlass 1 eindringenden Öls durch das Feinfiltermedium 3 passieren, so dass die Filtrierwirkung der Ölfiltervorrichtung ständig zunimmt. Diese zunehmende Verbesserung der Ölreinheit gelingt dabei ohne Betätigung von Steilgliedern wie zum Beispiel Ventilen, Klappen oder Blenden. Es kann damit kein Blockieren oder ungenaues Verlagern von mechanischen Bauteilen auftreten, so dass ein sehr sicheres und selbstregelndes System zur Ölreinigung erreicht wird. Das gleichzeitige Passieren von Öl durch das Feinfiltermedium 3 und das Grobfiltermedium 4 ermöglicht somit eine stets optimale Ölreinigung in kürzester Zeit, wobei der Flächenanteil des Feinfiltermediums 3 und somit der Anteil des Ölvolumenstromes durch das Feinfiltermedium 3 mit abnehmender Viskosität zunimmt. Bei sehr niedriger Viskosität des Öls wurde beobachtet, dass eine gute Filtrierung bereits dann erreicht wird, wenn der durch das Feinfiltermedium 3 passierende Volumenanteil des zu filtrierenden Öls mindestens 50 % des gesamten durch die Ölfiltervorrichtung passierenden Ölvolumenstromes beträgt.

Eine Erhöhung der Filtereffizienz wird erreicht, wenn bei der in Fig. 1 dargestellten Ausführungsform an der Filterunterschale 2 Abstandssicken 11 vorgesehen sind. Diese ermöglichen eine Unterströmung des Feinfiltermediums 3 und verhindern ein Anhaften des Feinfiltermediums 3 an der Innenseite der Filterunterschale 2. Eine Verformung der Filterunterschale 2 kann durch einen Abstützdom 10 erzielt werden. Abstandsrippen 8 ermöglichen in ähnlicher Weise wie die Abstandssicken 11 einen vorbestimmten Abstand zwischen Innenseite der Filteroberschale 5 und dem Grobfiltermedium 4. Ein weitere Verbesserung der Filtrierleistung lässt sich durch ein Stützgitter 9 zwischen dem Feinfiltermedium 3 und dem Grobfiltermedium 4 erreichen.

Von besonderer Bedeutung für die Filtrierleistung ist die Anzahl und Form der permanenten Öffnung(en) 6 in dem Feinfiltermedium 3. Wenn mehrere Öffnungen vorgesehen sind, können diese in gleichmäßigen oder ungleichmäßigen Abständen zueinander in dem Feinfiltermedium 3 verteilt sein. Dies hängt von einer vorbestimmten absoluten Durchflussmenge, einer vorbestimmten Durchflussmenge in Relation zur Temperatur sowie einer vorbestimmten Filtriereffizienz ab. Weitere Parameter zur Verbesserung der Ölreinheit sind die Höhe der Unterschale 2 und Oberschale 5, das Höhenverhältnis zwischen diesen beiden Filterschalen 2 und 5, die Höhenposition des Feinfiltermediums 3 und Grobfiltermediums 4 innerhalb der Filtervorrichtung und somit die Volumenanteile der Innenräume 20, 30 und 40, sowie der Werkstoff und die Beschaffenheit der Filtermedien 3 und 4. Ebenso ist die Position und der hydraulische Querschnitt des Öleinlass 1 für die Filtrierleistung von Bedeutung, um zu erreichen, dass beim Öleintritt in die Filtervorrichtung 100 keine Luft mit angesaugt wird. Auch die Abstandshalter 8, 9, 10 und 11 bestimmen in ihrer Form, Anzahl und Lage innerhalb der Filtervorrichtung und Position zueinander sowie in Bezug auf die Form und Position der permanenten Öffnung(en) die Effizienz der erfindungsgemäßen Ölfiltervorrichtung. Die optimale Abstimmung dieser Parameter erfolgt durch Simulation und Versuch. Die erfindungsgemäße Ölfiltervorrichtung ermöglicht im Vergleich zu einer herkömmlichen Saugölfiltervorrichtung, welche mit einer Druckölfiltervorrichtung kombiniert ist, eine Kosteneinsparung um mindestens 80 %. Die Gewichtseinsparung beträgt aufgrund der nicht mehr erforderlichen Druckölfiltervorrichtung mit Gehäuse und Peripheriekomponenten mehr als 50 %, wobei bei der erfindungsgemäßen Ölfiltervorrichtung alle funktionsrelevanten Merkmale einer separaten Saugölfiltervorrichtung und einer separaten Druckölfiltervorrichtung erzielt werden.

## Patentansprüche

1. Ölfiltervorrichtung (100), aufweisend:
- einen Öleinlass (1) und einen Ölauslass (7), wobei am Ölauslass (7) eine Saugölpumpe anschließbar ist, mit welcher sich ein Unterdruck zwischen Öleinlass (1) und Ölauslass (7) erzeugen lässt,
- ein Grobfiltermedium (4) und ein Feinfiltermedium (3), welche zwischen dem Öleinlass (1) und dem Ölauslass (7) derart angeordnet sind, dass unabhängig von der Viskosität eines durch den Öleinlass (1) eindringenden Öls ein Volumenanteil dieses Öls permanent das Grobfiltermedium (4) passiert und gleichzeitig der verbleibende Volumenanteil dieses Öls das Feinfiltermedium (3) passiert,
**dadurch gekennzeichnet,**
**dass** das Feinfiltermedium (3) in Strömungsrichtung vor dem Grobfiltermedium (4) angeordnet ist,
**dass** das Feinfiltermedium (3) mit wenigstens einer permanenten Öffnung (6) versehen ist, durch welche Öl ungefiltert passieren kann und dass ein Zwischenraum (30) zwischen dem Feinfiltennedium (3) und dem in Strömungsrichtung dahinter angeordneten Grobfiltermedium (4) vorgesehen ist.

2. Ölfiltervorrichtung (100) nach Anspruch 1,
**dadurch gekennzeichnet,**
**dass** bei hoher Viskosität des Öls der durch die mindestens eine permanente Öffnung (6) des Feinfiltermediums (3) zum Grobfiltermedium (4) passierende Volumenanteil des Öls etwa 90 bis 95 % des gesamten durch die Ölfiltervorrichtung (700) passierenden Ölvolumenstromes beträgt.

3. Ölfiltervorrichtung (100) nach einem der Ansprüche 1 oder 2,
**dadurch gekennzeichnet,**
**dass** bei niedriger Viskosität des Öls der durch das Grobfiltermedium (4) passierende Volumenanteil des Öls maximal 50 % des gesamten durch die Ölfiltervorrichtung (100) passierenden Ölvolumenstromes beträgt

4. Ölfiltervorrichtung (100) nach einem der Ansprüche 1 bis 3,
**dadurch gekennzeichnet,**
**dass** das Feinfiltermedium (3) ein Glasvlies, Kunststoffvlies, Cellulosevlies oder Feindrahtgewebe ist.

5. Ölfiltervorrichtung (100) nach einem der Ansprüche 1 bis 4.
**dadurch gekennzeichnet,**
**dass** das Grobfiltermedium (4) ein Metallgewebe oder ein Kunststoffgewebe ist.

6. Ölfiltervorrichtung (100) nach einem der Ansprüche 1 bis 5,
**dadurch gekennzeichnet,**
**dass** die Ölfiltervorrichtung (100) eine Filteroberschale (5) und eine Filterunterschale (2) aufweist und die Filteroberschale (5) mit mindestens einem Abstandshalter (8) zum Grobfiltermedium (5) versehen ist.

7. Ölfiltervorrichtung (100) nach Anspruch 6,
**dadurch gekennzeichnet,**
**dass** die Filterunterschale (2) mit mindestens einem Abstandshalter (10, 11) versehen ist

8. Ölfiltervorrichtung (100) nach einem der Ansprüche 6 oder 7,
**dadurch gekennzeichnet,**
**dass** zwischen dem Grobfiltermedium (4) und dem Feinfiltermedium (3) mindestens ein Abstandshalter (9) vorgesehen ist.

9. Ölfiltervorrichtung (100) nach Anspruch 8,
**dadurch gekennzeichnet,**
**dass** der Abstandshalter (9) glasfaserverstärkten Kunststoff, vorzugsweise PA66GF30-35, oder Metalldrahtgewebe oder extrudiertes Kunststoffgewebe aufweist.

10. Ölfiltervorrichtung (100) nach einem der Ansprüche 8 oder 9,
**dadurch gekennzeichnet,**
**dass** ein Verhältnis der Höhen von Filteroberschale (5) zu Abstandhalter (9) zwischen dem Grobfiltermedium (4) und dem Feinfiltermedium (3) zu Filterunterschale (2) etwa gleich 42:38:20 ist.

11. Öffltervorrichtung (100) nach einem der Ansprüche 8 bis 10
**dadurch gekennzeichnet,**
**dass** ein freies Ende oder die freien Enden eines Abstandshalters (8, 9, 10, 11) mit einem Radius versehen ist oder sind.

12. Olfitervorrichtung (100) nach einem der Ansprüche 6 bis 11,
**dadurch gekennzeichnet,**
**dass** die Filteroberschale (5) Kunststoff und die Filterunterschale (2) Metall aufweist oder umgekehrt.

13. Ölfiltenvorrichtung (100) nach einem der Ansprüche 6 bis 12,
**dadurch gekennzeichnet,**
**dass** die filteroberschale (5) PA66CF30-35 aufweist.

14. Ölfiltervorrichtung (100) nach einem der Ansprüche 1 bis 13,
**dadurch gekennzeichnet,**
**dass** ein hydraulischer Querschnitt des Öleinlass (1) mindestens um den Faktor 1,5 größer ist als ein hydraulischer Querschnitt des Ölauslass (7).

15. Ölwanne mit einer Ölfiltervorrichtung (100) gemäß einem der Ansprüche 1 bis 14.

## Claims

1. An oil filter device (100), having:
- an oil inlet (1) and an oil outlet (7), wherein a suction oil pump by means of which a negative pressure can generate between the oil inlet (1) and the oil outlet (7) may be connected to the oil outlet (7),
- a course filter medium (4) and a fine filter medium (3) which are arranged between the oil inlet (1) and the oil outlet (7) in such a way that, irrespective of the viscosity of an oil penetrating through the oil inlet (1), a volume percent of this oil permanently passes through the course filter medium (4) and the remaining volume percent of this oil simultaneously passes through the fine filter medium (3),
**characterised in that**
the fine filter medium (3) is arranged upstream of the course filter medium (4) in the flow direction,
**in that** the fine filter medium (3) is provided with at least one permanent opening (6) through which oil can pass unfiltered and **in that** a clearance (30) is provided between the fine filter medium (3) and the course filter medium (4) arranged behind it in the flow direction.

2. An oil filter device (100) according to Claim 1,
**characterised in that**,
with a high viscosity of the oil, the volume percent of the oil passing through the at least one permanent opening (6) of the fine filter medium (3) to the course filter medium (4) is approximately 90 to 95% of the total oil volume flow passing through the oil filter device (100).

3. An oil filter device (100) according to one of Claims 1 and 2,
**characterised in that**,
with a low viscosity of the oil, the volume percent of the oil passing through the course filter medium (4) is a maximum of 50% of the total oil volume flow passing through the oil filter device (100).

4. An oil filter device (100) according to one of Claims 1 to 3,
**characterised in that**
the fine filter medium (3) is a glass-fibre fleece, cellulose fleece or fine wire fabric.

5. An oil filter device (100) according to one of Claims 1 to 4,
**characterised in that**
the course filter medium (4) is a woven metal fabric or a synthetic fabric.

6. An oil filter device (100) according to one of Claims 1 to 5,
**characterised in that**
the oil filter device (100) has a filter upper shell (5) and a filter lower shell (2) and the filter upper shell (5) is provided with at least one spacer (8) between it and the course filter medium (5).

7. An oil filter device (100) according to Claim 6,
**characterised in that**
the filter lower shell (2) is provided with at least one spacer (10, 11).

8. An oil filter device (100) according to one of Claims 6 and 7,
**characterised in that**
at least one spacer (9) is provided between the course filter medium (4) and the fine filter medium (3).

9. An oil filter device (100) according to Claim 8,
**characterised in that**
the spacer (9) contains glass-fibre reinforced synthetic material, preferably PA66GF30-35, or woven metal wire fabric or extruded synthetic fabric.

10. An oil filter device (100) according to one of Claims 8 and 9,
**characterised in that**
a ratio of the heights of the filter upper shell (5) to the spacer (9) between the course filter medium (4) and the fine filter medium (3) to the filter lower shell (2) is approximately equal to 42:38:20.

11. An oil filter device (100) according to one of Claims 8 to 10,
**characterised in that**
a free end or the free ends of a spacer (8, 9, 10, 11) is/are provided with a radius.

12. An oil filter device (100) according to one of Claims 6 to 11,
**characterised in that**
the filter upper shell (5) contains synthetic material and the filter lower shell (2) contains metal or vice versa.

13. An oil filter device (100) according to one of Claims 6 to 12,
**characterised in that**
the filter upper shell (5) contains PA66GF30-35.

14. An oil filter device (100) according to one of Claims 1 to 13,
**characterised in that**
a hydraulic cross-section of the oil inlet (1) is a factor of at least 1.5 greater than a hydraulic cross-section of the oil outlet (7).

15. An oil pan having an oil filter device (100) according to one of Claims 1 to 14.

## Revendications

1. Dispositif de filtre à huile (100), présentant :
- une entrée d'huile (1) et une sortie d'huile (7), sachant qu'une pompe à huile aspirante peut être raccordée à la sortie d'huile (7), laquelle peut générer une dépression entre l'entrée d'huile (1) et la sortie d'huile (7),
- un support de filtre grossier (4) et un support de filtre fin (3) qui sont disposés entre l'entrée d'huile (1) et la sortie d'huile (7) de telle manière qu'indépendamment de la viscosité d'une huile pénétrant l'entrée d'huile (1), une part de volume de cette huile passe en permanence le support de filtre grossier (4) et en même temps la part de volume restante de cette huile passe le support de filtre fin (3),
**caractérisé en ce que** le support de filtre fin (3) est disposé dans le sens d'écoulement avant le support de filtre grossier (4), **en ce que** le support de filtre fin (3) est pourvu d'au moins une ouverture permanente (6), par laquelle de l'huile peut passer sans être filtrée et **en ce qu'**un espace intermédiaire (30) est prévu entre le support de filtre fin (3) et le support de filtre grossier (4) disposé derrière dans le sens d'écoulement.

2. Dispositif de filtre à huile (100) selon la revendication 1, **caractérisé en ce qu'**en cas de viscosité élevée de l'huile, la part de volume de l'huile passant par au moins une ouverture permanente (6) du support de filtre fin (3) jusqu'au support de filtre grossier (4) est comprise environ entre 90 et 95 % de l'ensemble du débit volumétrique d'huile passant par le dispositif de filtre à huile (100).

3. Dispositif de filtre à huile (100) selon l'une quelconque des revendications 1 ou 2, **caractérisé en ce qu'**en cas de faible viscosité de l'huile, la part de volume de l'huile passant par le support de filtre grossier (4) s'élève au maximum à 50 % de l'ensemble du débit volumétrique d'huile passant par le dispositif de filtre à huile (100).

4. Dispositif de filtre à huile (100) selon l'une quelconque des revendications 1 à 3, **caractérisé en ce que** le support de filtre fin (3) est un voile de verre, un voile synthétique, un voile de cellulose ou un tissu à fils de faible diamètre.

5. Dispositif de filtre à huile (100) selon l'une quelconque des revendications 1 à 4, **caractérisé en ce que** le support de filtre grossier (4) est un tissu métallique ou un tissu synthétique.

6. Dispositif de filtre à huile (100) selon l'une quelconque des revendications 1 à 5, **caractérisé en ce que** le dispositif de filtre à huile (100) présente une coque supérieure de filtre (5) et une coque inférieure de filtre (2) et la coque supérieure de filtre (5) est pourvue d'au moins un élément d'écartement (8) par rapport au support de filtre grossier (5).

7. Dispositif de filtre à huile (100) selon la revendication 6, **caractérisé en ce que** la coque inférieure de filtre (2) est pourvue d'au moins un élément d'écartement (10, 11).

8. Dispositif de filtre à huile (100) selon l'une quelconque des revendications 6 ou 7, **caractérisé en ce qu'**au moins un élément d'écartement (9) est prévu entre le support de filtre grossier (4) et le support de filtre fin (3).

9. Dispositif de filtre à huile (100) selon la revendication 8, **caractérisé en ce que** l'élément d'écartement (9) présente du plastique renforcé par des fibres de verre, de préférence du PA66GF30-35 ou du tissu à fils de faible diamètre ou du tissu synthétique extrudé.

10. Dispositif de filtre à huile (100) selon l'une quelconque des revendications 8 ou 9, **caractérisé en ce qu'**un rapport entre les hauteurs de coque supérieure de filtre (5) à l'élément d'écartement (9) entre le support de filtre grossier (4) et le support de filtre fin (3) et à la coque inférieure de filtre (2) est à peu près égal à 42:38:20.

11. Dispositif de filtre à huile (100) selon l'une quelconque des revendications 8 à 10, **caractérisé en ce qu'**une extrémité libre ou les extrémités libres d'un élément d'écartement (8, 9, 10, 11) est ou sont pourvues d'un rayon.

12. Dispositif de filtre à huile (100) selon l'une quelconque des revendications 6 à 11, **caractérisé en ce que** la coque supérieure de filtre (5) présente du plastique et la coque inférieure de filtre (2) présente du métal ou inversement.

13. Dispositif de filtre à huile (100) selon l'une quelconque des revendications 6 à 12, **caractérisé en ce que** la coque supérieure de filtre (5) présente du PA66GF30-35.

14. Dispositif de filtre à huile (100) selon l'une quelconque des revendications 1 à 13, **caractérisé en ce qu'**une section hydraulique de l'entrée d'huile (1) est supérieure au moins du facteur 1,5 à une section hydraulique de la sortie d'huile (7).

15. Bac d'huile avec un dispositif de filtre à huile (100) selon l'une quelconque des revendications 1 à 14.
